# EUROPÄISCHE PATENTANMELDUNG

(11) **EP 1 954 105 A1**
(43) Veröffentlichungstag der Anmeldung: **06.08.2008**
(21) Anmeldenummer: 08100407.9
(22) Anmeldetag: 14.01.2008
(51) Int. Cl.: H05B 37/02, H02J 13/00

(54) **Verfahren und System zur Datenübertragung bei Betriebsgeräten für Leuchtmittel**

(30) Priorität: 29.01.2007 DE 102007004397
(71) Anmelder: TridonicAtco GmbH & Co. KG, 6851 Dornbirn (AT)
(72) Erfinder: Rudigier, Martin, 6555 Kappl (AT)
(74) Vertreter: Rupp, Christian

(57) **Zusammenfassung**

Die vorliegende Erfindung bezieht sich auf die Übertragung von Daten, insbesondere auf ein System zur Erkennung von Statusinformationen aufweisend:
- ein Gebäudetechnik-Gerät (30) mit einem Status-Anschluss (2, 3) für den Anschluss von Mitteln (38) zur Status-Signalisierung und
- ein Betriebsgerät (4) für Leuchtmittel (7) aufweisend eine erste Bus-Schnittstelle (12, 13) zur Datenübertragung über einen Bus (20) und einen Sensor-Anschluss (8, 9) zum Anschluss an einen Sensor,

wobei das Betriebsgerät (4) dazu ausgebildet ist, mittels des Sensor-Anschlusses (8, 9) die vom Gebäudetechnik-Gerät (30) ausgegebene Status-Signalisierung zu erfassen.

## Beschreibung

Die vorliegende Erfindung bezieht sich auf die Übertragung von Daten, insbesondere auf ein Verfahren und ein System zur Datenübertragung, im Bereich der Gebäudetechnik, insbesondere der Beleuchtungstechnik.

Als ein Beispiel für eine Datenübertragung im Bereich von Beleuchtungen ist aus der EP 0 949 741 A2 die Übermittlung von Daten über ein Notbeleuchtungssystem, insbesondere die Übermittlung von Statusinformationen, zu einer externen Überwachungseinheit bekannt.

Das Notbeleuchtungssystem gemäß der EP 0 949 741 A2 umfasst einen zentralen Kontroller, eine Kommunikationsschaltung, zehn Bus-Leitungen und eine Vielzahl von Knoten. Der zentrale Kontroller ist mit der Kommunikationsschaltung direkt verbunden und überwacht dadurch den Datenverkehr auf den Bus-Leitungen.

Die zehn Bus-Leitungen sind an die Kommunikationsschaltung angeschlossen und können jeweils 99 Knoten aufnehmen, so dass insgesamt bis zu 990 Knoten Daten zu der Kommunikationsschaltung übertragen können.

Ein Bus-Knoten besteht im Wesentlichen aus einer ersten Schaltung zur Steuerung einer Notleuchte und einer zweiten Schaltung zur Überwachung der Betriebsfähigkeit der Notleuchte. Der Status der ersten Steuerungsschaltung wird dabei mittels einer Leuchtdiode angezeigt.

Die Spannung der Leuchtdiode wird von der zweiten Überwachungsschaltung ermittelt, so dass Informationen über den Status der ersten Steuerungsschaltung gewinnen werden kann. Diese Statusinformationen werden dann von der zweiten Überwachungsschaltung über eine Bus-Leitung bis zum zentralen Kontroller weitergegeben.

Diese zentrale Überwachungsfunktion ist allerdings auf Notleuchten begrenzt und nur Statusinformationen dieser Notleuchten können vom zentralen Kontroller verwalten und verarbeiten werden.

Weiterhin ist es von Nachteil, dass dieses System nur dort in einem Gebäude zur Verfügung gestellt wird, wo eine Notleuchte bzw. ein Notlichtgerät auch installiert wird. Diese Notlichtgeräte werden standardmäßig nur in der Nähe von Treppen, Aufzügen oder generell in der Nähe von Ausgängen eingesetzt. Deshalb kann dieses System nicht zur Überwachung von Geräten dienen, die sich nicht an Gebäude-Notausgängen befinden.

Aus der US 2003/0222603 ist es bekannt, Sensoren über eine spezielle Funkschnittstelle einzubinden.

Dementsprechend ist es Aufgabe der vorliegenden Erfindung, diesem Nachteil abzuhelfen und eine Technik vorzuschlagen, die eine Übertragung von Daten z.B. in Gebäuden ermöglicht. Insbesondere sollte ermöglicht werden, dass verschiedene Zusatzgeräte Daten übertragen und gegebenenfalls austauschen können. Es gibt nämlich zahlreiche Zusatzgeräte, die selbst nicht busfähig sind. Diese Geräte können eine digitale Statusanzeige beispielsweise akustisch oder optisch ausgeben. Beispiele sind ein Notlichtgerät, das den Status funktionsbereit/Störungsfall anzeigen kann, ein Rauchmelder, ein Temperatursensor oder ein Infrarot-Bewegungsmelder (PIR). Das Zusatzgerät kann auch ein elektronisches Vorschaltgerät sein.

Zentrale Idee der vorliegenden Erfindung ist es dabei, solche Geräte mit einer Schnittstelle eines Betriebsgeräts für Leuchtmittel zu verbinden, wobei das Betriebsgerät eine weitere busfähige Schnittstelle beispielsweise gemäß dem digitalen DALI-Standard aufweisen kann.

Die Erfindung richtet sich also an derartige Zusatzgeräte, die beispielsweise über keine Bus- bzw. Kommunikationsschnittstelle verfügen, aber die eine vorzugsweise optische oder akustische Statussignalisierung aufweisen. Es wird nunmehr vorgeschlagen, solch ein Zusatzgerät an ein Betriebsgerät (oder elektronisches Vorschaltgerät) mit einer Bus- bzw. Kommunikations-Schnittstelle und einem Sensor-Anschluss (oder ähnlicher Schnittstelle) anzuschließen, so dass das Betriebsgerät über seine Bus-Schnittstelle eine vom Zusatzgerät empfangene Statussignalisierung an eine Zentrale weiterleiten kann.

Dadurch kann beim Zusatzgerät auf eine aufwändige Schnittstelle mit Potentialtrennung oder kabelloser Übertragung verzichtet werden.

Die Zusatzgeräte beeinflussen den Betrieb der an dem Betriebsgerät angeschlossenen Leuchtmittel nicht. Vielmehr dient das Betriebsgerät dazu, die Statusinformation von dem angeschlossenen Zusatzgerät über die busfähige Schnittstelle des Betriebsgeräts für Leuchtmittel an eine an dem Bus angeschlossene Zentrale weiterzuleiten. Somit kann z.B. der Status der angeschlossenen Zusatzgeräte zentral abgefragt werden.

Gemäß einem ersten Aspekt der vorliegenden Erfindung ist also System zur Erkennung von Statusinformationen vorgesehen, aufweisend ein Gebäudetechnik-Gerät mit einem Status-Anschluss für den Anschluss von Mitteln zur Status-Signalisierung und ein Betriebsgerät für Leuchtmittel aufweisend eine erste Bus-Schnittstelle zur Datenübertragung über einen Bus und einen Sensor-Anschluss zum Anschluss an einen Sensor. Das Betriebsgerät ist dazu ausgebildet, mittels des Sensor-Anschlusses die vom Gebäudetechnik-Gerät ausgegebene Status-Signalisierung zu erfassen.

Die Mittel zur Status-Signalisierung können zur optischen oder akustischen Ausgabe von Statusinformationen ausgelegt sein.

Ein an den Sensor-Anschluss angeschlossener optischer oder akustischer Sensor kann die vom Gebäudetechnik-Gerät ausgegebene Status-Signalisierung erfassen.

Die Mittel zur Status-Signalisierung können mindestens eine Leuchte, insbesondere Leuchtdiode, aufweisen. Der an den Sensor-Anschluss angeschlossener Sensor kann ein Lichtsensor sein.

Der Status-Anschluss des Gebäudetechnik-Geräts kann mit dem Sensor-Anschluss des Betriebsgeräts direkt verdrahtet sein.

Der Sensor-Anschluss kann zwischen einem Helligkeitsüberwachungsmodus zum Überwachen der Helligkeit und einem Signalisierungserfassungsmodus zum erfassen einer Status-Signalisierung umschaltbar sein.

Das Umschalten zwischen Helligkeitsüberwachungs- und Signalisierungserfassungsmodus kann über die Bus-Schnittstelle und den Bus gesteuert werden.

Das Gebäudetechnik-Gerät kann selbständig einen Selbsttest durchführen und anschließend entsprechende Statusinformationen ausgeben.

Das Gebäudetechnik-Gerät kann einen Testauslöser-Anschluss aufweisen zum Auslösen eines Selbsttests.

Ein Auslösetaster kann an den Testauslöser-Anschluss angeschlossen sein.

Der Sensor-Anschluss des Betriebsgeräts kann mit dem Testauslöser-Anschluss derart verdrahtet sein, dass das Betriebsgerät einen Selbsttest starten kann.

Der Sensor-Anschluss kann zwischen einem Sendemodus zum Starten eines Selbsttests des Gebäudetechnik-Geräts und einem Signalisierungserfassungsmodus zum erfassen einer Status-Signalisierung umschaltbar sein.

Eine Zentraleinheit kann zur Kommunikation mit dem Betriebsgerät über den Bus vorgesehen sein.

Das Betriebsgerät kann die erfasste Status-Signalisierung über die Bus-Schnittstelle zu der Zentraleinheit überträgen.

Das Gebäudetechnik-Gerät, das Betriebsgerät und das Leuchtmittel können in einer Leuchte integriert sein.

Das Betriebsgerät kann ein Sensor, ein Aktor, eine Beleuchtung oder eine Anzeige sein.

Das Gebäudetechnik-Gerät kann ein Bewegungsmelder, ein Notlichtgerät, ein Rauchmelder, ein Temperatursensor oder ein Infrarot-Empfänger sein.

Das Gebäudetechnik-Gerät kann nicht busfähig sein.

Gemäß einem weiteren Aspekt der vorliegenden Erfindung ist ein Verfahren vorgesehen zur Erkennung von Statusinformationen durch ein Betriebsgerät für Leuchtmittel aufweisend eine erste Bus-Schnittstelle zur Datenübertragung über einen Bus und einen Sensor-Anschluss zum Anschluss an einen Sensor. Ein Gebäudetechnik-Gerät weist einen Status-Anschluss für den Anschluss von Mitteln zur Status-Signalisierung auf und diese Mittel geben Statusinformationen aus. Das Betriebsgerät ist dazu ausgebildet, mittels des Sensor-Anschlusses die vom Gebäudetechnik-Gerät ausgegebene Status-Signalisierung zu erfassen.

Die Mittel zur Status-Signalisierung können zur optischen oder akustischen Ausgabe von Statusinformationen ausgelegt sein.

Ein an den Sensor-Anschluss angeschlossener optischer oder akustischer Sensor kann die vom Gebäudetechnik-Gerät ausgegebene Status-Signalisierung erfassen.

Die Mittel zur Status-Signalisierung können mindestens eine Leuchte, insbesondere Leuchtdiode, aufweisen. Der an den Sensor-Anschluss angeschlossener Sensor kann ein Lichtsensor sein.

Der Status-Anschluss des Gebäudetechnik-Geräts kann mit dem Sensor-Anschluss des Betriebsgeräts direkt verdrahtet sein.

Der Sensor-Anschluss kann zwischen einem Helligkeitsüberwachungsmodus zum Überwachen der Helligkeit und einem Signalisierungserfassungsmodus zum erfassen einer Status-Signalisierung umschaltbar sein.

Das Umschalten zwischen Helligkeitsüberwachungs- und Signalisierungserfassungsmodus kann über die Bus-Schnittstelle und den Bus gesteuert werden.

Das Gebäudetechnik-Gerät kann selbständig einen Selbsttest durchführen und anschließend entsprechende Statusinformationen ausgeben.

Das Gebäudetechnik-Gerät kann einen Testauslöser-Anschluss aufweisen zum Auslösen eines Selbsttests.

Ein Auslösetaster kann an den Testauslöser-Anschluss angeschlossen sein.

Der Sensor-Anschluss des Betriebsgeräts kann mit dem Testauslöser-Anschluss derart verdrahtet sein, dass das Betriebsgerät einen Selbsttest starten kann.

Der Sensor-Anschluss kann zwischen einem Sendemodus zum Starten eines Selbsttests des Gebäudetechnik-Geräts und einem Signalisierungserfassungsmodus zum erfassen einer Status-Signalisierung umschaltbar sein.

Eine Zentraleinheit kann zur Kommunikation mit dem Betriebsgerät über den Bus vorgesehen sein.

Das Betriebsgerät kann die erfasste Status-Signalisierung über die Bus-Schnittstelle zu der Zentraleinheit überträgen.

Das Gebäudetechnik-Gerät, das Betriebsgerät und das Leuchtmittel können in einer Leuchte integriert sein.

Das Betriebsgerät kann ein Sensor, ein Aktor, eine Beleuchtung oder eine Anzeige sein.

Das Gebäudetechnik-Gerät kann ein Bewegungsmelder, ein Notlichtgerät, ein Rauchmelder, ein Temperatursensor oder ein Infrarot-Empfänger sein.

Das Gebäudetechnik-Gerät kann nicht busfähig sein.

Weitere Merkmale, Vorteile und Eigenschaften der vorliegenden Erfindung werden nunmehr durch Beschreibung von Ausführungsbeispielen und unter Bezugnahme auf die Figuren der begleitenden Zeichnungen näher ersichtlich.
- Fig. 1: zeigt schematisch eine Ausführungsform eines Systems zur Datenübertragung gemäß der vorliegenden Erfindung,
- Fig. 2: zeigt eine besondere Ausführungsform eines Geräts zur Übermittlung von Daten gemäß der vorliegenden Erfindung,
- Fig. 3: zeigt eine Ausführungsform des erfindungsgemäßen Systems aufweisend ein Notlichtgerät,
- Fig. 4: zeigt eine weitere Ausführungsform des erfindungsgemäßen Systems aufweisend ein Notlichtgerät, einen Rauchmelder und einen Bewegungsmelder,
- Fig. 5: zeigt eine Ausführungsform des erfindungsgemäßen Systems aufweisend ein Notlichtgerät, und
- Fig. 6: und 7 zeigen zwei Ausführungsformen aufweisend eine bidirektionale Kommunikation.

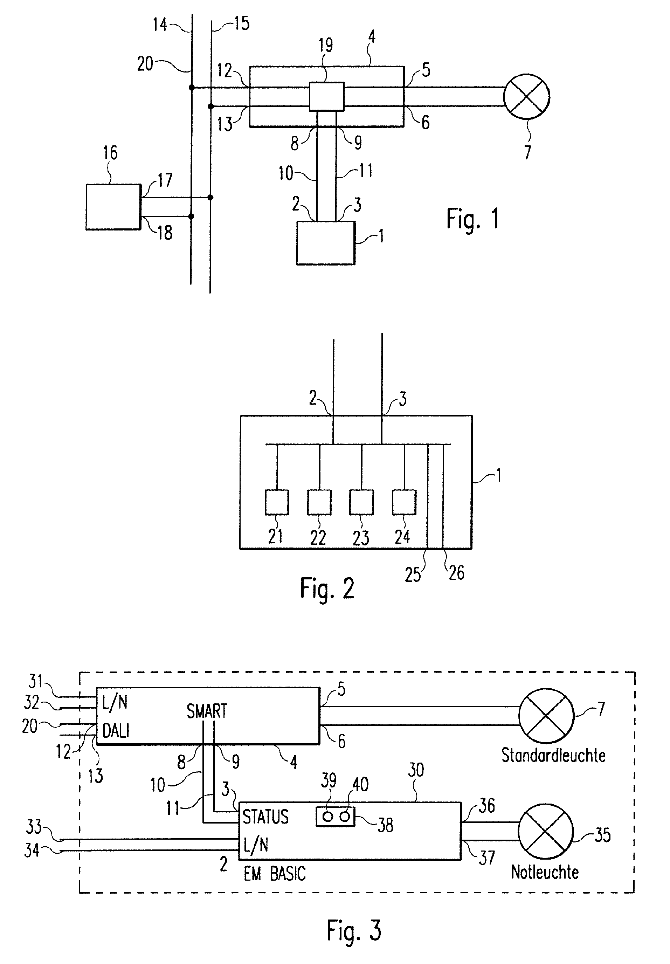

In Fig. 1 ist schematisch eine Ausführungsform der vorliegenden Erfindung dargestellt.

Das erfindungsgemäße System zur Datenübertragung weist ein Gerät 1 auf mit zwei Ausgangsleitungen 2, 3, über die das Gerät 1 ein Datensignal senden kann. Die Zahl der Ausgangsleitungen 2, 3 kann beliebig sein. Insbesondere ist es möglich, dass mehr als zwei Ausgangsleitungen 2, 3 benutzt werden, so dass das Gerät 1 zum Beispiel parallele Datenströme übermitteln kann.

Die Ausgangsleitungen oder Schnittstellen 2, 3 können analog und/oder digital ausgeführt sein, was die Übermittlung eines analogen bzw. digitalen Datensignals ermöglicht. Die Stärke oder Amplitude eines gesendeten analogen Datensignals kann kontinuierlich variieren und dabei jeden Wert zwischen einem bestimmten Maximum und einem bestimmten Minimum annehmen.

Vorteilhaft ist es in diesem Zusammenhang, das Analogsignal zu modulieren. Eine Modulations-Einheit (in den Figuren nicht dargestellt) kann im Gerät 1 integriert werden, um eine modulierte analoge Quellinformation zu übertragen. Beispiele einer analogen Modulation sind die Amplitudenmodulation, die Frequenzmodulation und die Phasenmodulation, wobei jeweils die Amplitude, die Frequenz und die Phase eines Trägersignals beispielsweise einer sinusförmigen Spannung durch die Quellinformationen modifiziert wird.

Statt ein Analogsignal zu übersenden, kann das Gerät 1 über die Ausgangsleitungen 2, 3 auch ein digitales Signal senden. Die Quellinformation wird in diesem Fall als diskretes und quantisiertes Signal zur Verfügung gestellt bzw. übersandt. Ist die Quellinformation selbst eine diskrete und quantisierte Information, kann sie ohne weiteres benutzt werden. Im Gegensatz dazu muss eine analoge d.h. kontinuierliche Quellinformation zuerst digitalisiert werden. Diese Digitalisierung wird z.B. von einem Analog-digital-Umsetzer (nicht gezeigt) im Gerät 1 selbst vorgenommen. Das erzeugte digitale Signal wird vorteilhafterweise von entsprechenden Einheiten auch komprimiert und moduliert.

Die als Analogsignal oder Digitalsignal übertragene Quellinformation kann eine Information beliebiger Natur sein. Es kann sich dabei beispielsweise um eine Statusinformation über den Zustand des Geräts 1 handeln. Außerdem kann diese Quellinformation vom Gerät 1 selbst oder von einer externen Einheit stammen bzw. erzeugt werden. Fig. 2 zeigt wie das Gerät 1 diese Quellinformation gewinnen kann. Die Quellinformation kann z.B. von einem Messinstrument 21, einem Sensor 22, einem Speicher 23 oder einem Prozessor 24 geliefert werden, oder auch über eine Zusatzschnittstelle 25, 26 empfangen werden.

Das analoge beziehungsweise digitale Datensignal wird über an die Ausgangsleitungen 2, 3 des Geräts 1 angeschlossene Leitungen 10, 11 einem Betriebsgerät 4 für Leuchtmittel 7 zugeführt. Zum Empfang des Datensignals weist das Betriebsgerät 4 eine entsprechende erste Schnittstelle 8, 9 auf, die ebenfalls an die Leitungen 10, 11 angeschlossen ist. Es handelt sich dabei um eine analoge bzw. digitale Schnittstelle 8, 9, je nachdem ob ein analoges oder ein digitales Signal über die Leitungen 10, 11 übertragen wird.

Diese erste Schnittstelle 8, 9 kann eine Sensorschnittstelle, insbesondere eine sogenannte Schnittstelle für einen aktiven oder passiven Lichtsensor, sein. Eine derartige Sensorschnittstelle kann z.B. an Lichtsensoren angeschlossen werden, um die Helligkeit der Lampe 7 zu regeln. Die vom Lichtsensor gemessene Helligkeit der Lampenumgebung wird über die erste Schnittstelle 8, 9 einer Steuervorrichtung 19 des Betriebsgeräts 4 zugeführt, wobei die Steuervorrichtung 19 dann die Regelung der Lampenhelligkeit vornehmen kann.

Das Betriebsgerät 4 ist dazu geeignet, eine oder mehrere Lampen 7, insbesondere Leuchtdioden oder Leuchtstofflampen wie z.B. Gasentladungslampen, zu betreiben. Das vorzugsweise als elektronisches Vorschaltgerät ausgeführte Betriebsgerät 4 weist die Steuervorrichtung 19 zum Steuern der Lampe 7 sowie eine zweite Schnittstelle 12, 13 mit Steuereingängen zum Anschluss eines digitalen Steuerbus bzw. Steuer-Leitungen 14, 15 auf. Die Steuerung beziehungsweise Regelung der Helligkeit der Lampe 7 erfolgt über eine dritte Schnittstelle 5, 6 des Betriebsgeräts 4.

Die zweite Schnittstelle 12, 13 des Betriebsgeräts 4 kann vorzugsweise als eine DSI (Digital Signal Interface), DALI (Digital Addressable Lighting Interface) oder DMX (Digital Multiplex) -Schnittstelle aufgebaut werden. Solche Schnittstellen unterstützen entsprechende Steuerprotokolle zum Steuern des Betriebsgeräts 4 bzw. zum Steuern und/oder Dimmen der Lampe 7. Über diese zweite Schnittstelle 12, 13 können gemäß dem entsprechenden Protokoll bestimmte Dimm-Sollwerte für die Lampe 7 zugeführt werden, so dass die Helligkeit der Lampe 7 gemäß diesen Dimm-Sollwerten von der Steuervorrichtung 19 bestimmt werden kann.

Das Betriebsgerät 4 ist mittels der zweiten Schnittstelle 12, 13 an zwei Leitungen 14, 15 eines Busses 20 angeschlossen. Der Bus 20 verbindet vorzugsweise eine Vielzahl von Betriebsgeräten 4 und mindestens eine Zentraleinheit 16, die wiederum über eine entsprechende Schnittstelle 17, 18 an den Bus 20 angeschlossen ist.

Daten können zwischen den verschiedenen an den Bus 20 angeschlossenen Knoten übertragen werden. Demnach können zwei Betriebsgeräte 4 oder zwei Zentraleinheiten 16 miteinander kommunizieren. Ein Betriebsgerät 4 kann ebenfalls mit einer Zentraleinheit 16 über den Bus 20 Daten austauschen.

Somit ist es für das Betriebsgerät 4 möglich, die vom Gerät 1 empfangenen Daten über den Bus 20 weiterzuleiten, so dass die an den Bus angeschlossene Zentraleinheit 16 durch Ablesen der Busdaten die vom Gerät 1 gesendete Quellinformation wieder gewinnen kann.

Die Adressierung von Daten über den Bus 20 kann beispielsweise derart implementiert werden, dass die vom Betriebsgerät 4 auf den Bus 20 übertragenen Daten als Datenpakete gesendet werden, wobei jedes Datenpaket nebst die vom Gerät 1 gesendete Quellinformation zusätzlich noch eine auf die Zentraleinheit 16 bezogene Empfänger-Adresse enthält. Alle angeschlossenen Knoten empfangen die Datenpakete und lesen das Empfängerfeld der Datenpakete, aber nur die Zentraleinheit 16 erkennt seine Adresse und wird dann auch die in den Datenpaketen enthaltene Quellinformation ablesen und verarbeiten.

Ein Datenpaket kann außer der Quellinformation und der Empfänger-Adresse auch zusätzliche Felder aufweisen wie beispielsweise die Sender-Adresse vom Betriebsgerät 4. In einem weiteren Feld kann auch die Adresse und/oder die Bezeichnung des Geräts 1, von dem die Quellinformation stammt, beschrieben werden.

Zwei Grundkonstellationen werden vom erfindungsgemäßen System unterstützt. Entweder wird die Quellinformation vom Betriebsgerät 4 auf den Bus 20 unaufgefordert übertragen, ohne dass ein entsprechender Befehl der Zentraleinheit 16 benötigt wird.

Alternativ dazu kann die Zentraleinheit 16 über den Bus 20 die Quellinformation auch direkt beim Betriebsgerät 4 abfragen bzw. ablesen: auf eine Abfrage der Zentraleinheit 16 antwortet das Betriebsgerät 4 mit der Übertragung der Quellinformation auf den Bus 20, so dass die Zentraleinheit 16 diese Quellinformation empfangen kann.

Fig. 3 zeigt eine besondere Ausführungsform der vorliegenden Erfindung, bei der das Gerät 1 ein Notlichtgerät 30 ist.

Gemäß der Erfindung kann jedes beliebige Gerät mit einem potentialfreien Kontakt an die erste Schnittstelle 8, 9 des Betriebsgeräts 4 angeschlossen sein. Besonders interessant sind dabei Geräte die in einer Leuchte selbst installiert werden können. Beispiele für solche Geräte sind Bewegungsmelder, Notlichtgeräte 30, Rauchmelder oder Infrarot-Empfänger.

Das in Fig. 3 dargestellte System bedient sich nun eines Notlichtgeräts 30, welches über eine Schnittstelle 36, 37 mit einer Notleuchte 35 verbunden ist. Zusätzlich dazu ist das Notlichtgerät 30 mit Netzleitungen 33, 34 verbunden.

Das Notlichtgerät 30 verfügt außerdem über eine Statusanzeige 38 mit mindestens einer Leuchtdiode 39, 40 oder LED (Light Emitting Diode) zur Anzeige des Status / Zustands des Geräts 30. Üblicherweise enthält eine Statusanzeige 38 eine oder zwei Statusleuchtdioden 39, 40, wobei das Leuchten, Blitzen oder Blinken der jeweiligen Statusleuchtdioden 39, 40 den Status des Notlichtgeräts 30 beschreibt. Dieser Status bezieht sich z.B. darauf, ob die Akkuladung des Notlichtgeräts 30 oder die Notleuchte 35 defekt ist, oder ob eine Netzstörung vorliegt.

In der besonderen Ausführungsform der Fig. 3 weist die Statusanzeige 38 zwei farbige Leuchtdioden 39, 40 auf. Die grüne Leuchtdiode 39 signalisiert einen einwandfreien Betrieb und die rote Leuchtdiode 40 einen Lampenfehler.

Die Durchführung eines Tests wird durch Blinken der grünen Leuchtdiode 39 angezeigt, während eine schnell bzw. langsam blinkende rote Leuchtdiode 40 einen Lade- bzw. Akkufehler anzeigt.

Analog zur optischen Signalwiedergabe durch die Statusanzeige 38 kann auch eine akustische Wiedergabeeinheit (nicht gezeigt) die Statusinformation akustisch kodiert wiedergeben.

Bei Notlichtgeräten 30 kann also die Einsatzbereitschaft der Akkuladung, der Statusleuchtdioden 39, 40, oder der Elektronik geprüft werden. Diese Überprüfung wird selbständig vom Notlichtgerät 30 vorgenommen und deren Ergebnis wird über die Statusanzeige 38 signalisiert. Das Notlichtgerät 30 oder generell das Gerät 1 kann dazu fähig sein, selbstständig in regelmäßigen Abständen einen Selbsttest bezüglich seiner Perfomance oder auch zur Erkennung von Fehlern durchzuführen. Selbsttests können beispielsweise wöchentlich oder jährlich durchgeführt werden und überprüfen insbesondere den Zustand des Akkus, den Zustand der Notlichtlampe oder den Ladungszustand. Bei den Selbsttests kann es sich auch um Funktionstests oder Betriebsdauertests handeln.

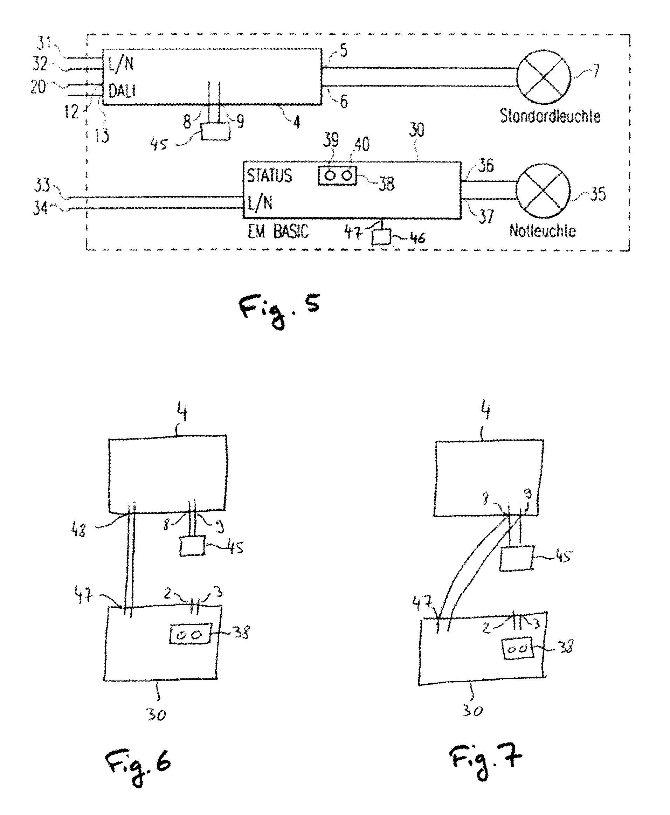

Wahlweise kann aber auch ein Prüftaster 46, siehe Fig. 5, an das Notlichtgerät 30 bzw. Gerät 1 über einen Taster-Anschluss 47 angeschlossen werden. Mit diesem Prüftaster 46 ist es einem Benutzer dann möglich, einen Test des Notlichtgeräts 30 auszulösen.

Die Erfindung schlägt nunmehr vor, die Statusleuchtdioden 39, 40 an die erste Schnittstelle 8, 9 des Betriebsgeräts 4 anzuschließen. Sobald ein Fehler bezüglich der Akkuladung oder der Statusleuchtdioden 39, 40 erkannt wird, wird dieser über die Leitungen 10, 11 dem Betriebsgerät 4 mitgeteilt. Diese Mitteilung kann dann über den Bus 20 zu der Zentraleinheit 16 weitergeleitet werden, wie oben bereits beschrieben.

In der besonderen Ausführungsform der Fig. 3 sind die Statusleuchtdioden 39, 40 mit einer ersten analogen oder digitalen Schnittstelle 8, 9 in Form eines Eingangs für einen passiven oder aktiven Sensor, insbesondere Lichtsensor, verbunden. Falls während der Selbstüberwachung des Notlichtgeräts 30 ein Fehler entdeckt wird, wird der Eingang 8, 9 des Betriebsgeräts 4 kurzgeschlossen. Dieser Fehler kann schließlich über den DALI-Bus 20 abgefragt werden.

Dabei wird für die Kommunikation zwischen dem Gerät 1 bzw. Notlichtgerät 30 und dem Betriebsgerät 4 keine Schnittstelle des Notlichtgeräts 30 genutzt. Das Betriebsgerät 4 ist vielmehr dazu ausgelegt, die Statusinformation des Notlichtgeräts 30 zu erkennen. Dies kann z.B. über ein optisches Abtasten der Status-Leuchtdioden 39, 40, durch ein optisches Überwachen der Hauptlichtquelle 35 des Notlichtgeräts 30 oder alternativ durch direktes Verdrahten der Anschlüsse für die Status-Leuchtdiode 39, 40 mit der ersten Schnittstelle 8, 9, beispielsweise in Form von Sensoranschlüsse, des Betriebsgeräts 4 erfolgen.

Die erste Möglichkeit zur Erkennung der Statusinformation sieht also ein optisches Abtasten der Status-Leuchtdioden 39, 40 vor, was direkt über einen Lichtsensor 45 an der ersten Schnittstelle 8, 9 des Betriebsgeräts 4 durchgeführt werden kann, siehe Fig. 5. Beispielsweise kann dann ein langsames Blinken der roten Leuchtdiode 40 vom Betriebsgerät 4 detektiert und aufgezeichnet und entsprechend der beschriebenen Ausführungsform als Akkufehler bewertet werden.

Genauso so kann aber gemäß der zweiten Möglichkeit zur Erkennung der Statusinformation auch mit dem Lichtsensor die Notleuchte 35 des Notlichtgeräts 30 überwacht werden. Diese Lösung ist gerade bei Notlichtbetriebsgeräten, die eine Leuchtdiode als Notlichtquelle betreiben, vorteilhaft, da bei einer Leuchtdiode sehr schwer ein möglicher Defekt anhand einer Überwachung der elektrischen Betriebsparameter zu erkennen ist.

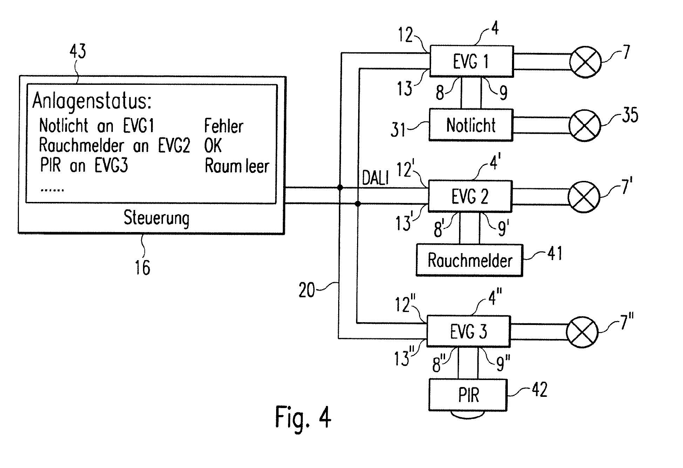

Fig. 4 zeigt weitere Ausführungsformen und Einsatzmöglichkeiten der vorliegenden Erfindung.

Das in Fig. 4 gezeigte System umfasst drei Betriebsgeräte 4, 4', 4" zur Steuerung von entsprechenden Leuchtmitteln 7, 7', 7". Die Betriebsgeräte 4, 4', 4" und die Zentraleinheit 16 sind an den Bus 20 angeschlossen, so dass diese Bus-Knoten miteinander kommunizieren können.

Das erste Betriebsgerät 4 ist über seine erste Schnittstelle 8, 9 mit einem Notlichtgerät 31 gemäß Fig. 3 verbunden. Das zweite und das dritte Betriebsgerät 4', 4'' sind jeweils über ihre erste Schnittstelle 8', 9' und 8'', 9'' an einen Rauchmelder 41 und einen Bewegungsmelder 42 angeschlossen.

Der Rauchmelder 41 kann eine interne Störung der Elektronik oder des Rauch-Sensors über den digitalen Eingang 8', 9' des zweiten dimmbaren Betriebsgeräts 4' und über den Bus 20 der Zentraleinheit 16 bekannt geben. Nicht nur Status-Informationen des Rauchmelders 41 können derart bis zur Zentraleinheit 16 gesendet werden, sondern auch eine Rauchalarm.

Beim Bewegungsmelder 42 können ebenso Status-Informationen über die Betriebsfähigkeit des Bewegungsmelders 42 sowie auch Informationen über die Funktion des Bewegungsmelders 42 der Zentraleinheit übertragen werden.

Die Zentraleinheit 16 ist in der Lage, Informationen über verschiedene an Betriebsgeräte 4, 4', 4" angeschlossene Geräte 31, 41, 42 zu sammeln, verarbeiten und gegebenenfalls einem Benutzer anzuzeigen 43. Die Überwachung der Geräte 31, 41, 42 ist vereinfacht, indem der Benutzer nicht mehr die Statusleuchtdioden 39, 40 der Geräte einzeln überprüfen und interpretieren muss. Mit dem erfindungsgemäßen System kann er hingegen zentral auf der Anzeige 43 die Informationen direkt ablesen.

In einem System bestehend aus der Zentraleinheit 16 und mehreren Betriebsgeräten 4, 4', 4'' wird der Zentraleinheit und jedem Betriebsgerät eine eindeutige Adresse zugewiesen, so dass eine Kommunikation zwischen diesen Einheiten über den Bus 20 überhaupt möglich ist. Die zusätzliche Geräte 31, 41, 42 benötigen hingegen keine eindeutige Adresse, da diese Geräte 31, 41, 42 vom jeweiligen Betriebsgerät 4, 4', 4'' quasi als Sub-Master überwacht werden.

Bei Benutzung einer digitalen ersten Schnittstelle 8, 9 ist es möglich, die vom Gerät 1 zum Betriebsgerät 4 übertragene Information mittels eines speziell dafür definierten Protokolls zu übertragen. Beispielsweise können die Fehlermeldungen bzw. Zustandsmeldungen des Notlichtgeräts 31, des Rauchmelders 41 oder des Bewegungsmelders 42 mit Hilfe eines eigenen Fehlerprotokolls zu senden, so dass das Betriebsgerät 4 und die Zentraleinheit 16 verschiedene Fehler oder Zustände des an das Betriebsgerät 4 angeschlossenen Geräts 31, 41, 42 einfach und schnell erkennen können.

Zusammenfassend kann beim Notlichtgerät 30 bzw. Gerät 1 auf eine Kommunikations-Schnittstelle verzichtet werden, um Daten wie beispielsweise Statusinformationen zum busfähigen Betriebsgerät 4 zu übersenden. Diese unidirektionale Kommunikation erfolgt durch optisches Abtasten bzw. Überwachen der Statusleuchtdioden 39, 40 oder der Notleuchte 35 des Notlichtgeräts 30, oder durch Verdrahten der Anschlüsse für Statusleuchtdioden 39, 40 mit dem Sensor-Anschluss 8, 9 des Betriebsgeräts 4.

Erfindungsgemäß ist es auch möglich, den Datenaustausch zwischen Notlichtgerät 30 und Betriebsgerät 4 bidirektional zu gestalten. Das Betriebsgerät 4 kann entsprechend über eine Pulsfolge, die es über eine Verdrahtung an das Notlichtgerät 30 überträgt, einen Selbsttest des Notlichtgeräts 30 über z.B. den Zustand des Akkus, der Lampe oder der Ladung initiieren. Daraufhin kann das Betriebsgerät 4 anhand der Signalisierung des Notlichtgeräts 30 überprüfen, ob ein Fehler oder Problem vorliegt.

Dabei kann eine Ausführungsform dieser bidirektionalen Kommunikation es vorsehen, dass über die Anschlüsse 8, 9 des Betriebsgeräts 4 zuerst Pulse oder Daten zum Initiieren eines Tests gesendet werden, und dass danach die gleichen Anschlüsse 8, 9 auf die Überwachung des Notlichtgeräts 30 umgeschaltet.

Alternativ oder zusätzlich dazu kann über eine Signalisierung durch das Betriebsgerät 4 an einen Anschluss des Notlichtgeräts 30, wie z.B. an den Taster-Anschluss 47 für den Prüftaster 46, ein Test des Notlichtgeräts 30 ausgelöst werden. In diesem Zusammenhang ist zu erwähnen, dass die Information zum Starten eines Selbsttests nicht an den Status-Anschluss 8, 9 gesendet werden kann, da ein solcher Status-Anschluss 8, 9 generell per Diode nur auf Senden inkl. LED Betrieb verschaltet ist.

Nach dieser Signalisierung durch das Betriebsgerät 4 überwacht das Betriebsgerät 4 mit Hilfe des Lichtsensors 45 das Verhalten des Notlichtgeräts 30. Insbesondere kann das Verhalten der Status-Leuchtdioden 39, 40 oder der Notleuchte 35 überwacht werden, wie bereits oben beschrieben.

Wie in Fig. 6 dargestellt, kann es hierfür notwendig sein, dass das Betriebsgerät 4 einen zusätzlichen Steuerausgang 48 zum Ansteuern des Notlichtgeräts 30 aufweist. Es kann aber auch durch Umschaltung des Betriebsmodus des Sensor-Anschlusses 8, 9 des Betriebsgeräts 4 von einem Sendebetrieb auf einen Überwachungsmodus umgeschaltet werden, siehe Fig. 7.

Der Sensor-Anschluss 8, 9 des Betriebsgeräts 4 kann beispielsweise über seine busfähige Schnittstelle 12, 13 umprogrammiert werden, so dass dieser Sensor-Anschluss 8, 9 nicht als Helligkeitsüberwachung sondern zur Statusüberwachung eines anderen Betriebsgerätes genutzt wird.

## Patentansprüche

1. System zur Erkennung von Statusinformationen aufweisend:
- ein Gebäudetechnik-Gerät (30), insbesondere Betriebsgerät für Leuchtmittel, aufweisend Mittel (38) zur Ausgabe von Information bezüglich des Status des Gebäudetechnik-Geräts (30), und
- ein Betriebsgerät (4) für Leuchtmittel (7) aufweisend eine erste Bus-Schnittstelle (12, 13) zur Datenübertragung über einen Bus (20) und einen Sensor-Anschluss (8, 9), der zum wahlweisen Anschluss eines Sensor, insbesondere eines Lichtsensors ausgebildet ist,
wobei das System derart ausgestaltet ist, dass die Statusinformation von dem Gebäudetechnik-Gerät (30) dem Sensor-Anschluss (8, 9) des Betriebsgeräts (4) zugeführt ist.

2. System nach Anspruch 1,
wobei die Mittel (38) zur Ausgabe von Statusinformation zur optischen oder akustischen Ausgabe von Statusinformationen ausgelegt sind.

3. System nach einem der vorhergehenden Ansprüche,
wobei ein an den Sensor-Anschluss (8, 9) angeschlossener optischer oder akustischer Sensor (45) die vom Gebäudetechnik-Gerät (30) ausgegebene Status-Signalisierung erfasst.

4. System nach einem der vorhergehenden Ansprüche,
**dadurch gekennzeichnet, dass** die Mittel (38) zur Status-Signalisierung mindestens eine Leuchte, insbesondere Leuchtdiode (39, 40), aufweisen, und dass der an den Sensor-Anschluss (8, 9) angeschlossener Sensor (45) ein Lichtsensor ist.

5. System nach Anspruch 1,
wobei die Mittel (38 zur Ausgabe von Information bezüglich des Status des Gebäudetechnik-Geräts (30) direkt mit dem Sensor-Anschluss (8, 9) des Betriebsgeräts (4) verdrahtet sind.

6. System nach einem der vorhergehenden Ansprüche,
wobei der Sensor-Anschluss (8, 9) zwischen einem Helligkeitsüberwachungsmodus zum Überwachen der Helligkeit und einem Signalisierungserfassungsmodus zum erfassen einer Status-Signalisierung umschaltbar ist.

7. System nach Anspruch 6,
wobei das Umschalten zwischen Helligkeitsüberwachungs- und Signalisierungserfassungsmodus über die Bus-Schnittstelle (12, 13) und den Bus (20) gesteuert wird.

8. System nach einem der vorhergehenden Ansprüche,
wobei das Gebäudetechnik-Gerät (30) selbständig einen Selbsttest durchführt und anschließend entsprechende Statusinformationen ausgibt.

9. System nach einem der vorhergehenden Ansprüche,
wobei das Gebäudetechnik-Gerät (30) einen Testauslöser-Anschluss (47) aufweist zum Auslösen eines Selbsttests.

10. System nach Anspruch 9,
wobei ein Auslösetaster (46) an den Testauslöser-Anschluss (47) angeschlossen ist.

11. System nach Anspruch 9 oder 10,
**dadurch gekennzeichnet ist, dass** der Sensor-Anschluss (8, 9) des Betriebsgeräts (4) mit dem Testauslöser-Anschluss (47) derart verdrahtet ist, dass das Betriebsgerät (4) einen Selbsttest starten kann.

12. System nach Anspruch 11,
wobei der Sensor-Anschluss (8, 9) zwischen einem Sendemodus zum Starten eines Selbsttests des Gebäudetechnik-Geräts (30) und einem Signalisierungserfassungsmodus zum erfassen einer Status-Signalisierung umschaltbar ist.

13. System nach einem der vorhergehenden Ansprüche, aufweisend eine Zentraleinheit (16) zur Kommunikation mit dem Betriebsgerät (4) über den Bus (20).

14. System nach Anspruch 13,
wobei das Betriebsgerät (4) die erfasste Status-Signalisierung über die Bus-Schnittstelle (12, 13) zu der Zentraleinheit (16) überträgt.

15. System nach einem der vorhergehenden Ansprüche,
wobei das Gebäudetechnik-Gerät (1), das Betriebsgerät (4) und das Leuchtmittel (7) in einer Leuchte integriert sind.

16. System nach einem der vorhergehenden Ansprüche,
wobei das Betriebsgerät (4) ein Sensor, ein Aktor, eine Beleuchtung oder eine Anzeige ist.

17. System nach einem der vorhergehenden Ansprüche,
wobei das Gebäudetechnik-Gerät (30) ein Bewegungsmelder, ein Notlichtgerät, ein Rauchmelder, ein Temperatursensor oder ein Infrarot-Empfänger ist.

18. System nach einem der vorhergehenden Ansprüche,
wobei das Gebäudetechnik-Gerät (30) nicht busfähig ist.

19. Verfahren zur Erkennung von Statusinformationen durch ein Betriebsgerät (4) für Leuchtmittel (7) aufweisend eine erste Bus-Schnittstelle (12, 13) zur Datenübertragung über einen Bus (20) und einen Sensor-Anschluss (8, 9) zum Anschluss an einen Sensor, wobei:
- ein Gebäudetechnik-Gerät (30) einen Status-Anschluss (2, 3) für den Anschluss von Mitteln (38) zur Status-Signalisierung aufweist und diese Mittel (38) Statusinformationen ausgeben, und
- das Betriebsgerät (4) dazu ausgebildet ist, mittels des Sensor-Anschlusses (8, 9) die vom Gebäudetechnik-Gerät (30) ausgegebene Status-Signalisierung zu erfassen.
